# EUROPEAN PATENT APPLICATION

(11) **EP 0 788 896 A2**
(43) Date of publication of application: **13.08.1997**
(21) Application number: 97101343.8
(22) Date of filing: 29.01.1997
(51) Int. Cl.: B60B 17/00

(54) **Improved monobloc wheel for locomotives and rail-vehicles**

(30) Priority: 09.02.1996 IT MI960243
(71) Applicant: Lucchini Siderurgica S.p.A., 25100 Brescia (IT)
(72) Inventor: Amici, Giampiero, 25100 Brescia (IT)
(74) Representative: Lecce, Giovanni

(57) **Abstract**

An improved wheel (10) for locomotives and rail-vehicles, especially for railway transports, is constituted of three integral sectors formed by a hub (12) with a transversally extended through-hole (14), a peripheral band or ring (12) with lead-flange (16') which meets the mushroom of the rail and by a plate (18), comprised between said sectors (12), (16), having a differentiated section, axially developed and provided with a plurality of equispaced through-holes (38), (38'), (40), obtained along circumferences having a different diameter.

## Description

The present invention relates to an improved monobloc wheel for locomotives and rail-vehicles.

More particularly, the present invention relates to an improved wheel as defined above, especially for railway transports, obtained as one only body and provided, on each of the opposite fronts, of a seat for the housing and fastening of the brake disc.

The concerned locomotives and rail-vehicles are generally equipped with tired-wheels having S-shaped radial section and wheel centre, and brake discs are keyed on the axle.

The main drawback associated to this type of construction solution concerns the overall dimensions of brake-discs that markedly limit the space necessary to house the transmission system and the motor.

Because of the incompatibility caused by the space available between motor, transmission and brake-discs, brake-discs were usually excluded, and a braking system with heads was adopted.

The head brake system cannot be utilised in case of high speed of the vehicle and high loads on the axle.

Object of this invention is to obviate the aforementioned drawbacks.

More particularly, object of this invention is to provide an improved monobloc wheel for locomotives and rail-vehicles, suitable to allow to brake by means of brake-discs mounted on the same wheel.

A further object of the invention is to provide users with an improved monobloc wheel that can guarantee a high level of resistance and reliability in the time, and also such as to be realised easily and economically.

These and still other objects are achieved by the improved monobloc wheel subject matter of this invention, characterised in that it is constituted of three integral sectors, formed by a hub with a transversally extended through-hole, a peripheral band or ring with lead-flange which meets the mushroom of the rail and by a central plate, comprised between said sectors, having a differentiated section, axially developed and provided with a plurality of equispaced transversal through-holes obtained along circumferences having different diameters.

The construction and functional characteristics of the improved monobloc wheel subject matter of the invention will be better stressed by the following detailed description of a preferred non limitative embodiment, made with reference to the attached drawings wherein:
Figure 1 shows a schematic partial front view of the improved monobloc wheel subject matter of the invention;
Figure 2 shows a schematic longitudinal section of the same wheel portion.

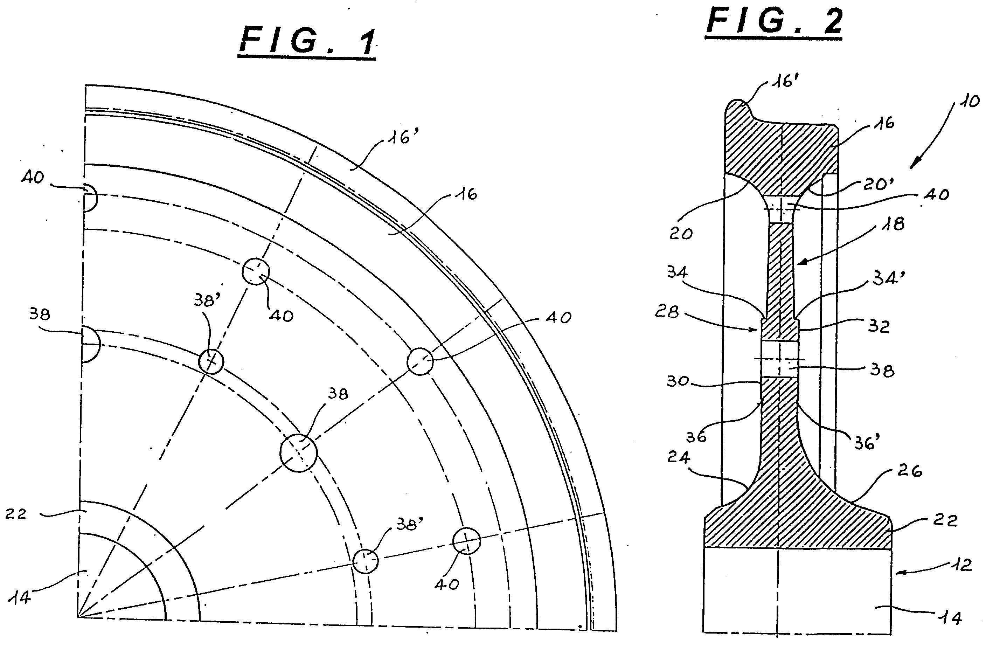

With reference to the above figures, the improved monobloc wheel subject matter of the invention is indicated as a whole by 10 in Figure 2, which represents by way of example its upper half-part, the resting lower half-part being specular to the same.

Said wheel defines basically three integral sectors, formed by a hub 12 with a transversally extended through-hole 14, a peripheral band or ring 16 and a central plate 18, having a differentiated section, comprised between said sectors. The peripheral band 16 forming the tyre, having a substantially trapezoid section, is provided on the external front with a conventional lead-flange 16, which meets a side of the rail mushroom; on the opposite side, said band 16 has progressively hollowed opposite sections which connect with the axially developed central plate 18.

According to the preferred embodiment represented in the above figures, said hollowed portions, indicated by 20, 20', connect with plate 18, with a radius comprised between 50 and 60 mm, preferably equal to 45 mm.

Hub 12 develops about the through-hole in a band 22 of limited height, comprised, by way of example, between 75 and 85 mm; from said band, the hub connects with plate 18 with progressively hollowed internal (24) and external (26) portions; on the internal front of wheel 10, the connection has a radius comprised between 60 and 100 mm, preferably equal to 95 mm, while on the opposite front the radius is comprised between 110 and 160 mm, and is preferably equal to 150 mm. The central plate 18 has, in its development, sectors having different thickness: said plate, which is in a substantially central position, is defined by a sector 28, of limited height and constant thickness, having the opposite internal (30) and external (32) fronts parallel and equispaced from the longitudinal axis of the wheel; the thickness of sector 28 is indicatively comprised between 40 and 55 mm. The part of plate 18 that develops from the hollowed portions 20, 20' of ring 16 increases progressively in thickness and connects with sector 28, having a greater thickness. Sector 28 connects with the central plate 18 with progressively hollowed internal (34) and external (34') portions: on the internal and external front of wheel 10, the connection has a radius comprised between 70 and 90 mm, preferably equal to 80 mm. In the same way, the part of plate 18 which develops from the hollowed portions 24, 26 of band 22 of hub 12, connects with sector 28. The latter is centrally provided with equispaced transversal through-holes, for housing the fastening means of brake-discs (not represented), of which more will be said later on.

Further transversal through-holes, indicated by 40, are formed on the part of plate 18 that develops from the hollowed portions 20, 20', substantially adjoining the ring or peripheral band 16, partly along the same portions 20, 20'. Preferably, said holes 40 have the same diameter and are developed along two circumferences having a slightly different diameter. Holes 38, wherein pins and bolts connecting brake-disc to the wheel are housed, alternate with more holes 38' of smaller diameter, sligtly staggered with respect to the first ones, as they are formed along a circumference of a greater diameter. Milled pins (not represented) serving for the connection of the brake-discs are inserted in said last holes 38'.

The opposite fronts of wheel 10, in the part comprised between hub 12 and ring 16, defines as many lowered circular seats, given the creation of the hollowed portions 20, 20' 24 and 26 forming the connections of the central plate 18; in said seats the brake-disks of wheel 10 which meet the bearing plane formed by the opposite internal (30) and external (32) fronts of sector 28, are advantageously located. Said discs are fastened to wheel 10 by means of the traditional mentioned pins and bolts inserted in holes 38 and distance pieces inserted in holes 38'. The central plate 18 is furtherly provided with through-openings which correspond to holes 40, to let in the distance pieces connected to the two opposite sectors of brake-discs.

As the improved wheel subject matter of this invention incorporates the brake-discs fastened to the same in points arranged along its circumference, it prevents the angular orientation of the same discs with respect to the braking slide-blocks, which, as a consequence, are less stressed.

The specific monobloc configuration of the wheel lends also an adequate side stiffness.

The invention, as has been described above and claimed in the following, has been proposed by way of example only, being understood that many modifications and variants may be made to the same, all of which however fall within the scope of the invention.

In particular, possible structural inversions or alternative locations of the components or parts that form, as a whole, the improved wheel subject matter of the invention, are considered as possible.

## Claims

1. An improved wheel for locomotives and rail-vehicles, especially for railway transports, characterised in that it is constituted of three integral sectors formed by a hub (12) with a transversally extended through-hole (14), a peripheral band or ring (16) with lead-flange (16') which meets the mushroom of the rail, and a plate (18), comprised between said sectors (12, (16), having a differentiated section, axially developed and provided with a plurality of equispaced through-holes (38), (38'), (40), obtained along circumferences having different diameters.

2. The improved wheel according to claim 1, characterised in that the peripheral band (16) has, on the opposite front with respect to the lead-flange (16'), progressively hollowed opposite portions (20), (20') which connect with said plate (18) with a radius equal to 45 mm.

3. The improved wheel according to the preceding claims, characterised in that hub (12) defines, about the through-hole (14), a band (22) whose height is comprised between 75 and 85 mm, which connects with plate (18) with progressively hollowed internal (24) and external (26) portions, with a radius equal to 95 and 150 mm respectively.

4. The improved wheel according to the preceding claims, characterised in that plate (18), in a substantially central position, has a sector of constant thickness (38), comprised between 40 and 55 mm, whose opposite internal (30) and external (32) fronts, parallel to one another, are equispaced from the longitudinal axis of said wheel.

5. The improved wheel according to one or more of the preceding claims, characterised in that the part of plate (18) developed by the hollowed portions (20), (20') of ring (16) has a progressive increase in its thickness and connects with sector (28) with progressively hollowed internal (34) and external (34') portions with a radius equal to 80 mm.

6. The improved wheel according to one or more of the preceding claims, characterised in that holes (38) are obtained in central position on sector (28) having a thickness greater than the thickness of plate (18), and house fastening means, such as bolts or the like, for a couple of brake-discs, each of which rests on the internal (30) or external (32) front of the same sector (18).

7. The improved wheel according to one or more of the preceding claims, characterised in that holes (40) are obtained on the part of plate (18) which develops from the hollowed portions (20), (20') substantially adjoining the peripheral ring or band (16), partly along the same portions, distance pieces being located and restrained in said holes.

8. An improved monobloc wheel for locomotives and rail-vehicles, as described with special reference to the reservations expressed in the last sentence of the descriptive part, illustrated by way of example and for the purposes specified.
